# EUROPÄISCHE PATENTSCHRIFT

(11) **EP 1 622 248 B1**
(45) Veröffentlichungstag und Bekanntmachung des Hinweises auf die Patenterteilung: **11.11.2015**
(21) Anmeldenummer: 05015606.6
(22) Anmeldetag: 19.07.2005
(51) Int. Cl.: H02M 7/17

(54) **Stromrichterschaltung**
Power converter circuit
Circuit convertisseur de puissance

(30) Priorität: 29.07.2004 DE 102004036872
(43) Veröffentlichungstag der Anmeldung: 01.02.2006
(73) Patentinhaber: GE Energy Power Conversion GmbH, 12277 Berlin (DE)
(72) Erfinder: Zingel, Reinhard, 12207 Berlin (DE)
(74) Vertreter: Serjeants LLP

(56) Entgegenhaltungen:
- EP-A- 0 472 267
- US-A- 5 781 428
- US-A1- 2002 186 112

## Beschreibung

Die Erfindung geht von einer Stromrichterschaltung aus, die mit mindestens einer Trafoschaltung mit einem Phasenverschiebungswinkel versehen ist.

Es ist bekannt (EP-A-0 472 267), beispielsweise eine 18-pulsige Stromrichterschaltung aus drei Brückenschaltungen zu erstellen, von denen zwei mit Trafoschaltungen zur Erzeugung eines Phasenverschiebungswinkels verbunden sind. Bei den Trafoschaltungen wird der Phasenverschiebungswinkel in bekannter Weise derart gewählt, dass sich die aus bestimmten harmonischen Oberschwingungspaaren resultierenden Ströme auslöschen. Diejenigen Ströme, die sich nicht auslöschen, werden dann häufig mit Hilfe von entsprechend abgestimmten, zusätzlichen Filterschaltungen gedämpft, damit vorgegebene Grenzwerte für die Oberschwingungen eingehalten werden.

Aufgabe der Erfindung ist es, eine Stromrichterschaltung zu schaffen, mit der die genannten Grenzwerte besser und möglichst ohne zusätzliche Filterschaltungen eingehalten werden können.

Diese Aufgabe wird bei einer Stromrichterschaltung der eingangs genannten Art erfindungsgemäß dadurch gelöst, dass der Phasenverschiebungswinkel derart eingestellt ist, dass sämtliche, aus harmonischen Oberschwingungen resultierenden Ströme ungleich Null sind und sicht nicht auslöschen.

Dies hat zur Folge, dass diejenigen Ströme, die aus harmonischen Oberschwingungen resultieren, und die sich nicht auslöschen, im Vergleich zum Stand der Technik geringer werden.

Insgesamt treten die aus den harmonischen Oberschwingungen resultierenden Ströme nicht mehr bei bestimmten harmonischen Oberschwingungspaaren auf, sondern sind auf alle Oberschwingungspaare verteilt.

Damit wird der Vorteil erreicht, dass durch die auf viele Oberschwingungspaare verstreuten Ströme die vorgegebenen Grenzwerte für die Oberschwingungen wesentlich einfacher eingehalten werden können. Insbesondere können diese Grenzwerte weitgehend eingehalten werden, ohne dass die hierzu sonst zusätzlichen Filterschaltungen erforderlich sind.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

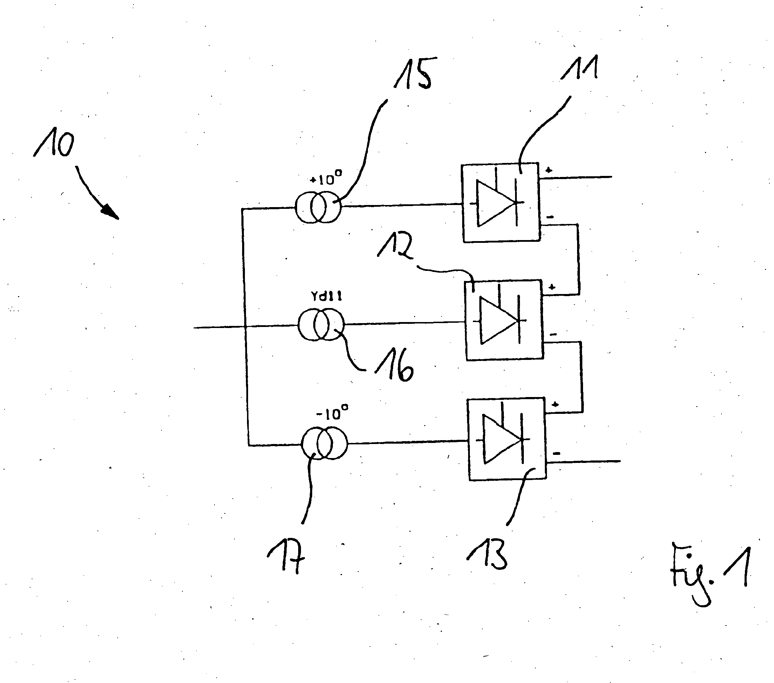

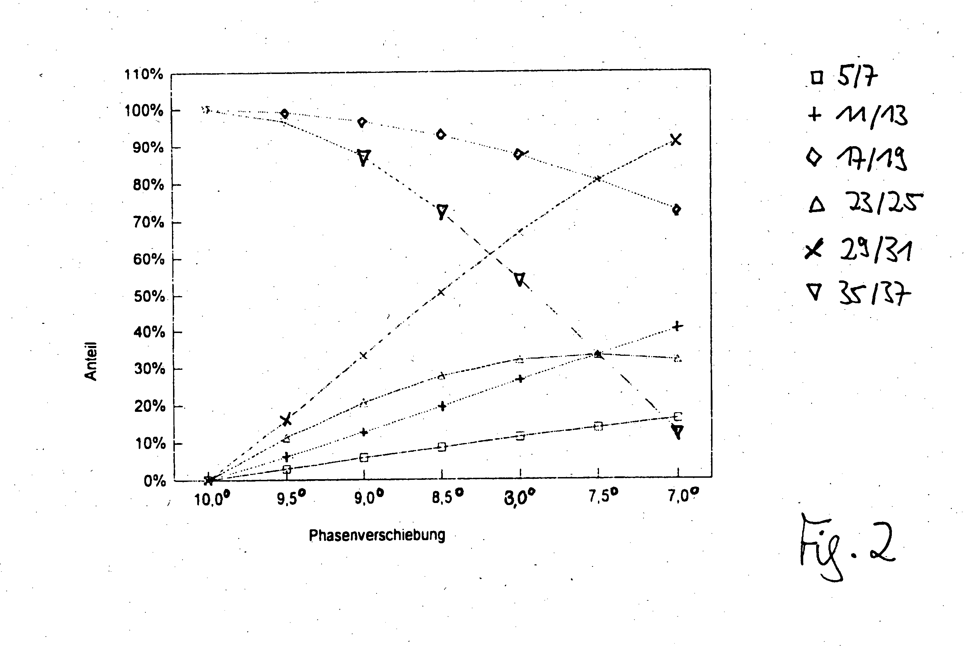

Figur 1 zeigt ein schematisches Blockschaltbild eines Ausführungsbeispiels einer 18-pulsigen Stromrichterschaltung, und Figur 2 zeigt ein schematisches Diagramm zu der Stromrichterschaltung der Figur 1. Es wird darauf hingewiesen, dass die nachfolgende Beschreibung in entsprechender Weise auch auf eine 12-pulsige, eine 24-pulsige oder sonstige höherpulsige Stromrichterschaltung anwendbar ist.

In der Figur 1 ist eine 18-pulsige Stromrichterschaltung 10 dargestellt, die aus drei 6-pulsigen Brückenschaltungen 11, 12, 13 aufgebaut ist. Die erste Brückenschaltung 11 wird von einer Trafoschaltung 15 mit einem Phasenverschiebungswinkel von + 10 Grad gespeist, die zweite Brückenschaltung 12 ist an eine Stern/Dreieckschaltung 16, beispielsweise eine Yd11-Schaltung angeschlossen, und die dritte Brückenschaltung wird von einer Trafoschaltung 17 mit einem Phasenverschiebungswinkel von - 10 Grad gespeist.

Anstelle der vorgenannten Trafoschaltung 15, Stern/Dreieckschaltung 16 und/oder Trafoschaltung 17 können auch andere Schaltungen zur Anwendung kommen. Wesentlich ist dabei nur, dass bei der erläuterten 18-pulsigen Stromrichterschaltung 10 zwischen diesen Schaltungen ein Differenzwinkel von 20 Grad vorhanden ist. Es versteht sich, dass bei einer 12- oder 24-pulsigen Stromrichterschaltung ein entsprechend angepasster Differenzwinkel vorhanden sein muss.

Die Eingänge der Schaltungen 15, 16, 17 werden mit einem Drehstrom beaufschlagt. Die Ausgänge der Brückenschaltungen 11, 12, 13 sind bei dem beschriebenen Ausführungsbeispiel in Serie geschaltet, so dass eine Gleichspannung abgegriffen werden kann. Die vorgenannten Ausgänge der Brückenschaltungen 11, 12, 13 können alternativ auch eine Parallelschaltung bilden und auf diese Weise eine Gleichspannung zur Verfügung stellen.

Wird die Stromrichterschaltung 10 der Figur 1 beispielsweise in einem spannungseinprägenden Umrichter eingesetzt, so ist es bekannt, dass dieser Umrichter auf der Drehstromseite Oberschwingungen erzeugt, die sich teilweise auslöschen und teilweise überlagern. Alternativ ist es ebenfalls möglich, die Stromrichterschaltung 10 in einem stromeinprägenden Umrichter einzusetzen.

Die in der Figur 1 vorgegebenen Phasenverschiebungswinkel von + / - 10 Grad der beiden Trafoschaltungen 15, 17 sowie die Verwendung der Stern/Dreieckschaltung 16 haben zur Folge, dass sich die Oberschwingungen der 5. und der 7., der 11. und der 13., der 23. und der 25. sowie der 29. und der 31. harmonischen Oberschwingungspaare auslöschen und damit die aus diesen Oberschwingungen resultierenden Ströme zu Null werden. Gleichzeitig haben die vorgenannten Phasenverschiebungswinkel auch zur Folge, dass die Oberschwingungen der 17. und der 19. sowie der 35. und der 37. harmonischen Oberschwingungspaare sich überlagern und die aus diesen Oberschwingungen resultierenden Ströme sich zu einem Gesamtstrom addieren.

In der Figur 2 sind die Anteile der aus den verschiedenen Oberschwingungspaaren resultierenden Ströme des beschriebenen Umrichters in Abhängigkeit von dem Phasenverschiebungswinkel dargestellt, wobei der jeweilige Anteil auf eine 6-pulsige Brückenschaltung gleicher Leistungsabgabe bezogen und in Prozent angegeben ist, und wobei der Phasenverschiebungswinkel in Grad angegeben ist.

Für einen Phasenverschiebungswinkel von 10 Grad ergibt sich aus Figur 2, dass der Anteil der 5. und der 7., der 11. und der 13., der 23. und der 25., sowie der 29. und 31. harmonischen Oberschwingungspaare jeweils 0 % ist. Gleichzeitig zeigt Figur 2, dass für den Phasenverschiebungswinkel von 10 Grad der Anteil der 17. und der 19. sowie der 35. und der 37. harmonischen Oberschwingungspaare jeweils 100 % ist. Dies bestätigt die vorstehende Erläuterung, dass bei einem Phasenverschiebungswinkel von 10 Grad die aus bestimmten Oberschwingungen resultierenden Ströme zu Null werden, während sich die aus anderen Oberschwingungen resultierenden Ströme überlagern.

Es ist weiterhin bekannt, dass die sich überlagernden Oberschwingungen zu unerwünschten Verzerrungen der von einem Energieversorgungsunternehmen gelieferten Netzspannung führen. Zur Einhaltung vorgegebener Grenzwerte für die Oberschwingungen werden deshalb häufig zusätzliche Filterschaltungen eingesetzt, die auf die Frequenzen der störenden Oberschwingungen abgestimmt sind.

Anstelle der vorstehenden, bekannten Vorgehensweise schlägt die Erfindung folgendes vor:

In der Stromrichterschaltung 10 der Figur 1 werden die beiden Trafoschaltungen 15, 17 nicht exakt auf einen Phasenverschiebungswinkel von + / - 10 Grad eingestellt, sondern auf einen davon abweichenden Wert. Dies hat zur Folge, dass sich die 5. und die 7., die 11. und die 13., die 23. und die 25. sowie die 29. und die 31. harmonischen Oberschwingungspaare nicht mehr auslöschen. Aus diesen Oberschwingungen ergeben sich damit Ströme, die ungleich Null sind. Gleichzeitig werden die aus dem 17. und dem 19. sowie dem 35. und dem 37. harmonischen Oberschwingungspaar resultierenden Ströme geringer im Vergleich zu einem Phasenverschiebungswinkel von + / - 10 Grad.

Mit anderen Worten bedeutet dies, dass die aus den Oberschwingungen resultierenden Ströme nicht mehr nur aus bestimmten harmonischen Oberschwingungspaaren hervorgehen, sondern aus allen harmonischen Oberschwingungspaaren zusammengesetzt sind und damit über alle harmonischen Oberschwingungspaare "verschmiert" sind.

Aus der Figur 2 ergibt sich dies wie folgt:

Wird beispielsweise ein Phasenverschiebungswinkel von 8 Grad gewählt, so liegen die Anteile der 5. und der 7., der 11. und der 13., der 23. und der 25. harmonischen Oberschwingungspaare zwischen etwa 10 % und etwa 35 %. Der Anteil des 29. und des 31. harmonischen Oberschwingungspaares beträgt sogar etwa 70 %. Die aus diesen harmonischen Oberschwingungspaaren resultierenden Ströme sind somit nicht mehr Null, wie dies bei einem Phasenverschiebungswinkel von + / - 10 Grad der Fall ist.

Gleichzeitig ist der Anteil des 17. und des 19. harmonischen Oberschwingungspaares auf etwa 90 % und der Anteil des 35. und des 37. harmonischen Oberschwingungspaares sogar auf etwa 55 % gesunken. Die aus diesen harmonischen Oberschwingungspaaren resultierenden Ströme sind damit geringer als dies bei einem Phasenverschiebungswinkel von + / - 10 Grad der Fall ist.

Bei der Erfindung werden also die bekannten, aus bestimmten harmonischen Oberschwingungspaaren resultierenden Ströme zumindest teilweise auf andere harmonische Oberschwingungspaare verlagert. Sämtliche, aus harmonischen Oberschwingungen resultierenden Ströme sind ungleich Null. Die Ströme treten damit verstreut über das gesamte Frequenzband der Oberschwingungen auf.

Dies bringt den Vorteil mit sich, dass die erwähnten Grenzwerte mit Hilfe der Erfindung besser eingehalten werden können, ohne dass hierzu zusätzliche Filterschaltungen erforderlich sind. Dies ergibt sich insbesondere daraus, dass - wie erläutert wurde - die aus Oberschwingungen resultierenden Ströme nicht mehr - wie beim Stand der Technik - nur bei bestimmten Oberschwingungspaaren auftreten, sondern dass diese Ströme über alle Oberschwingungspaare verteilt sind. Damit sind die Ströme bei den vorgenannten, bestimmten Oberschwingungspaaren geringer, was gleichbedeutend damit ist, dass ein Grenzwert für diese Oberschwingungen besser eingehalten werden kann.

Die in der Figur 2 dargestellten Anteile können vorab berechnet werden. Es wird hierzu beispielhaft auf die Veröffentlichung "Convertors as Harmonic Sources" von Reinhard Zingel, Thesis for Master of Engineering, University of Stellenbosch, 1984, verwiesen.

Anhand der berechneten Anteile können dann diejenigen Phasenverschiebungswinkel für die beiden Trafoschaltungen 15, 17 der Figur 1 ausgewählt werden, die für die Erstellung des erwünschten spannungseinprägenden Umrichters bzw. des erwünschten stromeinprägenden Umrichters am geeignetsten sind.

## Patentansprüche

1. Stromrichterschaltung (10) mit mindestens einer Trafoschaltung (15, 17) mit einem Phasenverschiebungswinkel, **dadurch gekennzeichnet, dass** der Phasenverschiebungswinkel derart eingestellt ist, dass sämtliche, aus harmonischen Oberschwingungen resultierenden Ströme ungleich Null sind und sich nicht auslöschen.

2. Stromrichterschaltung (10) nach Anspruch 1, **dadurch gekennzeichnet, dass** es sich um eine 12-pulsige, eine 18-pulsige, eine 24-pulsige oder eine höherpulsige Stromrichterschaltung handelt.

3. Stromrichterschaltung (10) nach Anspruch 2, **dadurch gekennzeichnet, dass** zwei Brückenschaltungen vorhanden sind, von denen eine an eine Stern-Schaltung und die andere and eine Dreieck-Schaltung angeschlossen ist.

4. Stromrichterschaltung (10) nach Anspruch 2, **dadurch gekennzeichnet, dass** drei Brückenschaltungen (11, 12, 13) vorhanden sind, von denen eine (11) an eine Trafoschaltung (15), eine zweite (12) an eine Stern/Dreieck-Schaltung (16) und eine dritte (13) an eine Trafoschaltung (17) angeschlossen ist.

5. Stromrichterschaltung (10) nach Anspruch 4, **dadurch gekennzeichnet, dass** der Phasenverschiebungswinkel ungleich + / - 10 Grad ist.

6. Stromrichterschaltung (10) nach Anspruch 4 oder Anspruch 5, **dadurch gekennzeichnet, dass** der Phasenverschiebungswinkel kleiner als + / - 10 Grad ist.

7. Stromrichterschaltung (10) nach einem der vorstehenden Ansprüche, **gekennzeichnet durch** die Verwendung in einem Umrichter, insbesondere in einem spannungseinprägenden Umrichter.

## Claims

1. Power converter circuit (10) with at least one transformer circuit (15, 17) with a phase shift angle, **characterized in that** the phase shift angle is set such that all currents resulting from harmonic components are not equal to zero and do not cancel out.

2. Power converter circuit (10) according to claim 1, **characterized in that** it is a 12-pulse, 18-pulse, 24-pulse or higher pulse power converter circuit.

3. Power converter circuit (10) according to claim 2, **characterized in that** two bridge circuits are present, of which one is connected to a star circuit and the other to a delta circuit.

4. Power converter circuit (10) according to claim 2, **characterized in that** three bridge circuits are present, of which one (11) is connected to a transformer circuit (15), a second (12) is connected to a star/delta circuit (16), and a third (13) is connected to a transformer circuit (17).

5. Power converter circuit (10) according to claim 4, **characterized in that** the phase shift angle is not equal to +/- 10 degrees.

6. Power converter circuit (10) according to claim 4 or 5, **characterized in that** the phase shift angle is less than +/- 10 degrees.

7. Power converter circuit (10) according to any of the preceding claims, **characterized by** its use in a converter, in particular in a voltage-impressing converter.

## Revendications

1. Montage convertisseur (10) comprenant au moins un circuit transformateur (15, 17) avec un angle de déphasage, **caractérisé en ce que** l'angle de déphasage est réglé de manière telle que la totalité des courants résultant des oscillations harmoniques soient différents de zéro et ne s'éteignent pas.

2. Montage convertisseur (10) selon la revendication 1, **caractérisé en ce qu'**il s'agit d'un montage convertisseur à 12 impulsions, à 18 impulsions, à 24 impulsions ou comportant un plus grand nombre d'impulsions.

3. Montage convertisseur (10) selon la revendication 2, **caractérisé en ce qu'**il est prévu deux montages en pont dont l'un est connecté à un montage en étoile et l'autre à un montage en triangle.

4. Montage convertisseur (10) selon la revendication 2, **caractérisé en ce qu'**il est prévu trois montages en pont (11, 12, 13) dont l'un (11) est connecté à un circuit transformateur (15), un deuxième (12) est connecté à un montage en étoile/triangle (16) et un troisième (13) à un circuit transformateur (17).

5. Montage convertisseur (10) selon la revendication 4, **caractérisé en ce que** l'angle de déphasage est différent de + / - 10 degrés.

6. Montage convertisseur (10) selon la revendication 4 ou la revendication 5, **caractérisé en ce que** l'angle de déphasage est inférieur à + / - 10 degrés.

7. Montage convertisseur (10) selon l'une des revendications précédentes, **caractérisé en ce qu'**il est utilisé dans un convertisseur, en particulier dans un convertisseur imprimant une tension.
